# EUROPÄISCHE PATENTSCHRIFT

(11) **EP 2 733 833 B1**
(45) Veröffentlichungstag und Bekanntmachung des Hinweises auf die Patenterteilung: **19.07.2017**
(21) Anmeldenummer: 12192752.9
(22) Anmeldetag: 15.11.2012
(51) Int. Cl.: H02K 41/03, H02K 3/47, H02K 9/22

(54) **Primärteil eines eisenlosen Linearmotors**
Primary part of an ironless linear motor
Partie primaire d'un moteur linéaire non ferreux

(43) Veröffentlichungstag der Anmeldung: 21.05.2014
(73) Patentinhaber: ETEL S.A., 2112 Môtiers (CH)
(72) Erfinder: Morel, Jean-Pierre, 25300 Les Fourgs (FR)
(74) Vertreter: Pleyer, Hans Anno

(56) Entgegenhaltungen:
- US-A- 5 565 718
- US-A- 5 723 917
- US-A1- 2006 049 700

## Beschreibung

Die vorliegende Erfindung betrifft ein Primärteil eines eisenlosen Linearmotors, bzw. einen Linearmotor mit einem solchen Primärteil. Solche Linearmotoren haben Vorteile in Anwendungen, die eine hochgenaue Positionierung erfordern, denn durch den Verzicht auf einen Eisenkern im Primärteil werden störende Rastmomente vermieden. Um auch ohne Eisenkern hohe Kräfte bewirken zu können, sind jedoch möglichst große Spulenströme nötig, die nur mit einer guten Kühlung der Spulen erreicht werden können.

So ist in der US 6639333 B1 ein eisenloser Linearmotor beschrieben, der den Tisch eines Belichtungsapparates für die Halbleiterfertigung antreibt. Für eine genaue Positionierung ist es wichtig, dass die einzelnen Spulen des Linearmotors genau an ihrer vorgesehen Position im Primärteil bleiben und sich nicht relativ zueinander verschieben. Dies ist hier durch eine kammartige Struktur gewährleistet, in deren Vertiefungen flächige Spulen eingelegt sind. Zur Kühlung der Spulen sind diese von einem Gehäuse ummantelt, in dem ein Kühlmedium in unmittelbarem Kontakt mit den Spulen steht.

Sehr ähnlich ist die Aufgabe der Kühlung und Befestigung der Spulen auch in der US 6313550 B1 gelöst, in der für einen eisenlosen Planarmotor ebenfalls Strukturen zum Aufstecken der flächigen Spulen und eine unmittelbare Umströmung mit einem Kühlmedium offenbart sind.

Aus der US 5565718 sind sich verjüngende Haltestücke bekannt, mit denen die Spulen eines Linearmotors gegen einen Träger gepresst werden.

Wegen der großen Kräfte, die auf die einzelnen Spulen im Linearmotor wirken, und wegen der möglichen Probleme mit der Isolation der Spulen bei direkter Umströmung mit einem Kühlmedium, ist es von Vorteil, wenn die Spulen mit einem elektrisch isolierenden, Wärme gut leitenden Kunstharz vergossen sind, das den Spulen zusätzliche Stabilität sowohl gegen Verformung als auch gegen ein Verschieben der ganzen Spule verleiht.

So ein Linearmotor ist in der US 5723917 offenbart. Hier sind die flachen Spulen in einen Kunstharzblock eingegossen und auf einer Kühlplatte angeordnet, die einerseits der magnetischen Flusskonzentration und andererseits der Kühlung dient, indem sie von Kanälen für ein Kühlmedium durchzogen ist. Der Kunstharzblock ist dabei durch von der Kühlplatte abstehende Nasen an der Platte formschlüssig mit der Kühlplatte verbunden. Gemäß der Lehre dieser Schrift muss jedoch die Abwärme der Spulen immer über einen elektrisch isolierenden Bereich zur Kühlplatte abgeführt werden, also über das Kunstharz und/oder weitere isolierende Schichten. Außerdem ist es schwierig, die Position der Spulen vor dem Vergießen mit Kunstharz exakt einzustellen.

Aufgabe der vorliegenden Erfindung ist es daher, ein Primärteil eines eisenlosen Linearmotors zu schaffen, das einfach zu fertigen ist, dessen Spulen in vorgegeben Positionen sicher gehalten werden, und bei dem die Spulen gut gekühlt werden können.

Diese Aufgabe wird gelöst durch ein Primärteil nach Anspruch 1.

Es wird ein Primärteil eines eisenlosen Linearmotors beschrieben, mit einer Kühlplatte, auf der flächige Spulen mit je einer zentralen Öffnung angeordnet sind. Die Spulen werden durch sich zur Kühlplatte hin verjüngende Haltestücke auf die Kühlplatte gepresst, die in die Öffnungen der Spulen eingreifen.

Auf diese Weise wird schon vor dem Vergießen des Primärteils mit einem Kunstharz ein besonders guter Kontakt zwischen den flächigen Spulen des Primärteils und der Kühlplatte hergestellt, die Kühlwirkung der vorzugsweise aktiv gekühlten Kühlplatte wird dadurch im Vergleich zum Stand der Technik deutlich erhöht.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine Explosionszeichnung eines Primärteils,
- Figur 2: eine Vorderansicht des Primärteils,
- Figur 3: eine Draufsicht auf einen Schnitt durch das Primärteil.

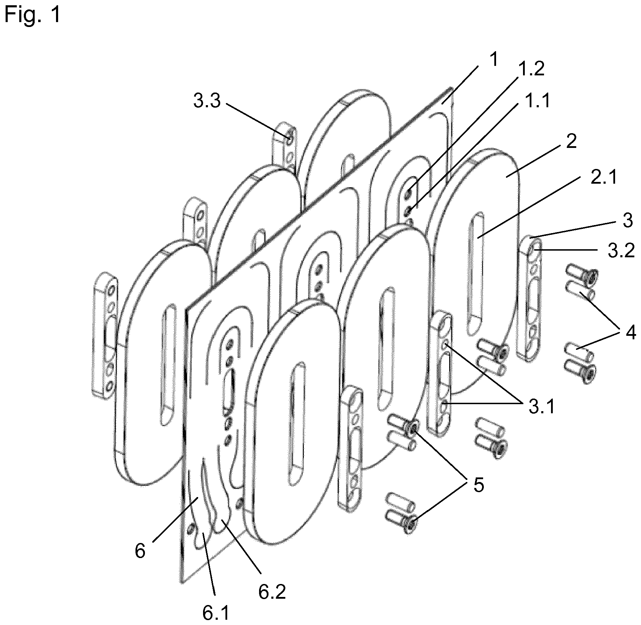

Die Figur 1 zeigt eine Explosionszeichnung eines eisenlosen Primärteils gemäß einem ersten Ausführungsbeispiel der Erfindung. Man erkennt eine Kühlplatte 1, die Kühlkanäle 6 mit einem Zulauf 6.1 und einem Ablauf 6.2 für jede auf der Kühlplatte 1 angeordnete, flächige Spule 2 aufweist.

Die Kühlplatte 1 ist aus Titan hergestellt, da dieses Metall eine gute Wärmeleitfähigkeit bei gleichzeitig vergleichsweise hohem spezifischem Widerstand aufweist. Ersteres ist eine für eine Kühlplatte notwendige Eigenschaft, letzteres vermeidet zu große Wirbelströme in der Kühlplatte.

Solche Kühlplatten aus Titan können vorteilhaft mit den Verfahren des 3D - Drucks hergestellt werden, sogar einschließlich der für die Anschlüsse des Kühlmediums notwendigen Gewinde. Aber auch durch klassische abtragende Bearbeitungsmethoden lassen sich solche Kühlplatten herstellen, so etwa durch das Verschweißen zweier Plattenhälften, in die zuvor Nuten gefräst wurden.

Die flächigen Spulen 2 bestehen jeweils aus einem Kupferdraht, der um eine zentrale Öffnung 2.1 der Spule 2 gewickelt ist, so dass zwar viele Drähte flächig in einer Ebene nebeneinander liegen, aber nur eine oder wenige Lagen solcher Windungen senkrecht zur Spulenebene bzw. parallel zur Spulenachse. Diese besondere Spulenform führt einerseits zu einem flachen Aufbau des Primärteils und ermöglicht andererseits einen großflächigen Kontakt mit der - ebenfalls flächigen - Kühlplatte 1.

Zur Herstellung solcher Spulen 2 wird der keramisch isolierte und mit einem Kleber beschichtete Kupferdraht auf eine Form gewickelt, die die spätere Öffnung 2.1 sehr genau definiert. Noch während die Spule auf dieser Form sitzt, wird sie unter Druck und Hitze verfestigt. Hierbei bleibt die Form der Öffnung 2.1 erhalten, während sich die äußere Form der Spule 2 durchaus verändern kann. Es ist daher vorteilhaft, bei der späteren Montage der Spule 2 auf die Form der Öffnung 2.1 Bezug zu nehmen.

Zur Montage werden die vorgefertigten Spulen 2 auf die Kühlplatte 1 gelegt und dort mit Haltestücken 3 befestigt. Diese Haltestücke 3 greifen in die Öffnungen 2.1 der Spulen 2 ein und legen deren Position fest. Zentrierstifte 4, die durch Bohrungen 1.1 in der Kühlplatte 1 und Bohrungen 3.1 in den Haltstücken 3 gesteckt werden, sorgen für eine genaue Ausrichtung der Haltestücke 3 und damit auch der Spulen 2. Für jedes Haltestück 3 werden zwei Zentrierstifte 4 verwendet, da so deren Lage auf der Kühlplatte 1 genau bestimmt ist. Eine der beiden Bohrungen 3.1 im Haltestück 3 kann als Langloch ausgebildet sein.

Die Haltestücke 3 weisen eine sich zur Kühlplatte 1 hin verjüngende, sowie eine zu den Öffnungen 2.1 der Spulen 2 korrespondierende Form auf, so dass sie einerseits bei der Montage leicht in die Öffnungen 2.1 gesteckt werden können, und andererseits mit ihrer breiteren, der Kühlplatte 1 abgewandten Seite die Spulen 2 auf die Kühlplatte 1 pressen. Die Spulen 2 können daher auf der Kühlplatte 1 weder in der Spulenebene verrutschen, noch können sie in Richtung der Spulenachse von den Haltestücken 3 abrutschen. Die Befestigung der Spulen 2 auf der Kühlplatte 1 ist dank dieser besonderen Form der Halterstücke 3 in allen Richtungen formschlüssig.

Im gezeigten Ausführungsbeispiel sind auf beiden Seiten der Kühlplatte 1 sich paarweise gegenüberliegende Spulen 2 angeordnet, deren Magnetfelder sich jeweils verstärken. Die Haltestücke 3 von zwei sich gegenüberliegenden Spulen 2 sind mittels Schrauben 5 miteinander verbunden, so dass beim Festziehen der Schrauben 5 die beiden Spulen 2 und die Kühlplatte 1 zwischen den Haltestücken 3 eingeklemmt wird. Hierzu weisen die Haltstücke 3 auf der einen Seite der Kühlplatte 1 eine Bohrung 3.2 mit einer Abschrägung für den Schraubenkopf auf, während das jeweils gegenüberliegende Haltestück eine Bohrung 3.3 mit einem Gewinde aufweist. Zur Montage wird also eine Schraube 5 durch die Bohrung 3.2 und eine korrespondierende Bohrung 1.2 in der Kühlplatte 1 geführt und in das Gewinde der Bohrung 3.3 des gegenüberliegenden Haltestücks 3 geschraubt. Die Haltestücke 3 und die Spulen 2 werden dann (wegen der sich verjüngenden Form der Haltestücke 3) beim Festziehen der Schrauben 5 gegen die Kühlplatte 1 gepresst. Zwischen den Spulen 2 und der Kühlplatte 1 wird so ein guter thermischer Kontakt hergestellt.

Um nicht zwei unterschiedliche Haltestücke 3 vorrätig halten zu müssen, bietet es sich an, eine der beiden Bohrungen für die Schrauben 5 mit der Abschrägung für den Schraubenkopf zu versehen, die andere mit dem Gewinde. Dann werden die beiden Haltestücke 3 miteinander verschraubt, indem je eine Schraube 5 von beiden Seiten der Kühlplatte durch die Bohrungen 3.2, 1.2 und 3.3 geführt werden.

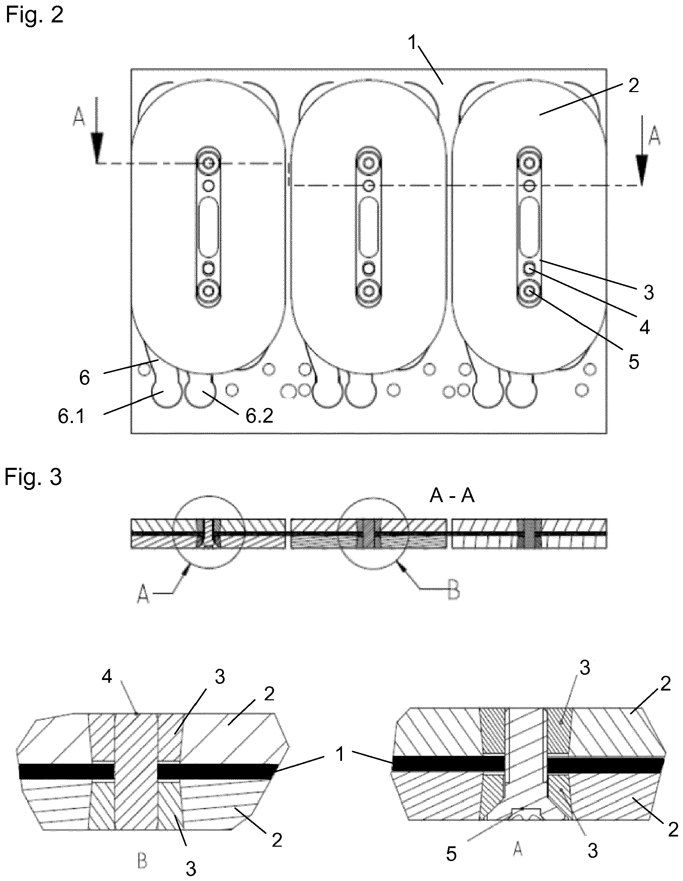

Die Figur 2 zeigt eine Vorderansicht des Primärteils. Man erkennt, dass der Bereich der Kühlplatte, der den Zulauf 6.1 und den Ablauf 6.2 enthält, von den Spulen 2 frei gelassen ist. Dieser aus dem Bereich der Spulen 2 heraus ragende Bereich wird mit einer nicht dargestellten Versorgungsleiste verbunden, über die ein Kühlmedium zugeführt wird, und in der auch die elektrischen Anschlüsse der Spulen 2 enthalten sind.

In der Vorderansicht der Figur 2 ist auch gut zu erkennen, dass die Haltestücke 3 von ihrer Form her den Öffnungen 2.1 der Spulen 2 entsprechen.

In der Figur 2 ist außerdem ein Schnitt A eingezeichnet, für den die Figur 3 eine Draufsicht zeigt. Der Schnitt A verläuft dabei in verschiedenen Höhen der Kühlplatte 1, so dass sowohl eine Schraube 5 als auch ein Zentrierstift 4 geschnitten dargestellt sind. Entsprechend sind die beiden vergrößerten Bereiche A und B der Figur 3 gewählt.

In den beiden vergrößerten Bereichen A und B der Figur 3 erkennt man die leicht konische, sich zur Kühlplatte 1 hin verjüngende Form der Haltestücke 3, mit denen die Spulen 2 auf der Kühlplatte 1 fixiert werden.

Gut zu erkennen ist, dass durch die Zentrierstifte 4 eine Ausrichtung der Kühlplatte 1, der Haltestücke 3 und damit auch der Spulen 2 zueinander erreicht wird. Somit können die Spulen ganz einfach sehr regelmäßig und genau so angeordnet werden, dass die elektromotorische Gegenkraft - in einem Linearmotor mit drei Phasen - einen Phasenversatz von 120 Grad elektrisch aufweist.

Mit den Schrauben 5 werden zwei gegenüberliegende Haltestücke 3 zueinander gezogen, so dass die Haltestücke 3 gegen die Kühlplatte 1 gepresst werden, wobei wegen der konischen Form der Haltestücke 3 auch die Spulen 2 gegen die Kühlplatte 1 gepresst werden.

Um die Spulen 2 nicht nur in ihrem Innenbereich nahe der Öffnung 2.1 und damit im Bereich des Eingriffs des Halterstücks 3 gegen die Kühlplatte 1 zu pressen, können im Außenbereich der Spulen 2 zusätzliche Klammern vorgesehen werden, die auch den Außenbereich gegen die Kühlplatte 1 pressen.

Eine bevorzugte Ausführung sieht jedoch vor, die Spulen 2 bei der Herstellung leicht konisch oder mit einer leichten Wölbung zu wickeln, so dass eine Tellerfeder entsteht. Die Spule 2 liegt bei der Montage zunächst nur mit ihren äußersten Windungen auf der Kühlplatte 1 auf, während sie im Innenbereich in der Nähe der Öffnung 2.1 etwas von der Kühlplatte 1 absteht. Erst bei der Montage eines Haltestücks 3 drückt dieses die Spule 2 vollständig gegen die Kühlplatte 1. Die dabei durch die Verformung der als Tellerfeder ausgebildeten Spule 2 auftretenden Federkräfte bewirken, dass die Spule 2 auch im Außenbereich gegen die Kühlplatte 1 gepresst wird, so dass nun ein ganzflächig guter thermischer Kontakt zwischen Spule 2 und Kühlplatte 1 gewährleistet ist. Auf diese Weise werden außerdem Lufteinschlüsse beim Vergießen des Primärteils mit Kunstharz zuverlässig vermieden. Solche Lufteinschlüsse würden den Wärmeübergang erheblich behindern.

In einer Abwandlung dieses ersten Ausführungsbeispiels kann die Kühlplatte 1 auch nur einseitig mit Spulen 2 bestückt werden. Hierzu können die Schrauben 5 unmittelbar mit der Kühlplatte 1 verschraubt werden, oder mit auf der den Spulen 2 gegenüberliegenden Seite angebrachten Muttern. Es ist dann auch vorstellbar, auf eine aktive Kühlung zu verzichten, und beispielsweise die den Spulen 2 gegenüber liegende Seite der Kühlplatte 1 mit geeigneten Kühlrippen zu versehen, um eine gute Wärmeabgabe an die Umgebung zu erreichen.

Sowohl bei einseitiger als auch bei beidseitiger Bestückung der Kühlplatte 1 mit Spulen 2 kann es ausreichend sein, den aus dem Bereich der Spulen 2 heraus ragenden Bereich der Kühlplatte 1 aktiv zu kühlen.

Das erfindungsgemäße Primärteil wird durch ein Sekundärteil zu einem Linearmotor vervollständigt. Dieses Sekundärteil weist eine Reihe von abwechselnd parallel und antiparallel zu den Spulenachsen magnetisierte Magnete auf, deren Magnetfelder mit den in den Spulen 2 des Primärteils fließenden Strömen wechselwirken und dabei eine Kraft bewirken, die den Linearmotor antreibt. Die Magnetreihe kann dabei nur auf einer Seite der Kühlplatte angeordnet sein (wie es etwa bei dem Planarmotor der eingangs zitierten US 6313550 der Fall ist), oder beidseits der Kühlplatte, wobei sich dann jeweils ungleichnamige Magnetpole gegenüber stehen (wie z.B. in der Figur 15 der eingangs zitierten US 6639333 B1 gezeigt). Eine solche doppelte Magnetbahn als Sekundärteil erhöht die Kraft des Linearmotors genauso wie die beidseitige Anordnung von Spulen 2 an der Kühlplatte 1.

## Patentansprüche

1. Primärteil eines eisenlosen Linearmotors, mit einer Kühlplatte (1), auf der flächige Spulen (2) mit je einer zentralen Öffnung (2.1) angeordnet sind, **dadurch gekennzeichnet, dass** die Spulen (2) durch sich zur Kühlplatte (1) hin verjüngenden Haltestücke (3) auf die Kühlplatte (1) gepresst werden, die in die Öffnungen (2.1) der Spulen (2) eingreifen, dass die Kühlpatte (1) beidseitig mit sich paarweise gegenüberliegenden Spulen (2) bestückt ist, und dass sich beidseits der Kühlplatte (1) jeweils zwei Haltestücke (3) von zwei sich gegenüberliegenden Spulen (2) gegenüberliegen, wobei die beiden Haltestücke (3) durch wenigstens einen Zentrierstift (4) zueinander ausgerichtet sind.

2. Primärteil nach Anspruch 1, **dadurch gekennzeichnet, dass** die Kühlplatte (1) und die Haltestücke (3) korrespondierende Bohrungen (1.1, 2.1) aufweisen, durch die die Zentrierstifte (4) gesteckt sind.

3. Primärteil nach Anspruch 1 oder 2, **dadurch gekennzeichnet, dass** die Haltestücke (3) mittels Schrauben (5) gegen die Kühlplatte (1) gepresst werden.

4. Primärteil nach einem der vorhergehenden Ansprüche, **dadurch gekennzeichnet, dass** die zwei sich gegenüberliegenden Haltstücke (3) mittels wenigstens einer der Schrauben (5) so miteinander verschraubt sind, dass die sich gegenüberliegenden Spulen (2) von den Haltestücken (3) gegen die Kühlplatte (1) gepresst werden.

5. Primärteil nach einem der vorhergehenden Ansprüche, **dadurch gekennzeichnet, dass** die flächigen Spulen (2) als Tellerfedern gewickelt sind, so dass eine vom Haltestück (3) in einem Innenbereich der Spulen (2) ausgeübte Anpresskraft durch eine Federwirkung auf einen Außenbereich der Spulen (2) übertragen wird, und somit die Spulen (2) ganzflächig gegen die Kühlplatte (1) gepresst werden.

6. Linearmotor mit einem Primärteil nach einem der vorhergehenden Ansprüche.

## Claims

1. Primary part of an ironless linear motor, comprising a cooling plate (1), on which flat coils (2) each having a central opening (2.1) are arranged, **characterized in that** the coils (2) are pressed onto the cooling plate (1) by holding pieces (3) which taper towards the cooling plate (1) and which engage in the openings (2.1) in the coils (2), **in that** the cooling plate (1) is provided on both sides with coils (2) which lie opposite one another in pairs, and **in that** respectively two holding pieces (3) of two opposite coils (2) lie opposite each other on both sides of the cooling plate (1), wherein the two holding pieces (3) are aligned with respect to one another by at least one centring pin (4).

2. Primary part according to Claim 1, **characterized in that** the cooling plate (1) and the holding pieces (3) have corresponding bores (1.1, 2.1), through which the centring pins (4) are inserted.

3. Primary part according to Claim 1 or 2, **characterized in that** the holding pieces (3) are pressed against the cooling plate (1) by means of screws (5).

4. Primary part according to any one of the preceding claims, **characterized in that** the two opposite holding pieces (3) are screwed to one another by means of at least one of the screws (5) so that the opposite coils (2) are pressed against the cooling plate (1) by the holding pieces (3).

5. Primary part according to any one of the preceding claims, **characterized in that** the flat coils (2) are wound as cup springs, so that a pressure force exerted by the holding piece (3) in an inner area of the coils (2) is transferred by a spring action to an outer area of the coils (2) and the coils (2) are thus pressed against the cooling plate (1) over the entire surface.

6. Linear motor having a primary part according to one of the preceding claims.

## Revendications

1. Partie primaire d'un moteur linéaire sans fer, avec une plaque de refroidissement (1), sur laquelle sont disposées des bobines plates (2) présentant chacune une ouverture centrale (2.1), **caractérisée en ce que** les bobines (2) sont pressées sur la plaque de refroidissement (1) par des pièces de maintien (3) qui se rétrécissent en direction de la plaque de refroidissement (1) et qui sont engagées dans les ouvertures (2.1) des bobines (2), **en ce que** la plaque de refroidissement (1) est garnie sur les deux côtés de bobines (2) opposées par paires, et **en ce que** deux pièces de maintien (3) de deux bobines opposées (2) se font respectivement face sur les deux côtés de la plaque de refroidissement (1), dans laquelle les deux pièces de maintien (3) sont alignées l'une par rapport à l'autre par au moins une goupille de centrage (4).

2. Partie primaire selon la revendication 1, **caractérisée en ce que** la plaque de refroidissement (1) et les pièces de maintien (3) présentent des trous correspondants (1.1, 2.1), à travers lesquels les goupilles de centrage (4) sont enfoncées.

3. Partie primaire selon la revendication 1 ou 2, **caractérisée en ce que** les pièces de maintien (3) sont pressées contre la plaque de refroidissement (1) au moyen de vis (5).

4. Partie primaire selon l'une quelconque des revendications précédentes, **caractérisée en ce que** les deux pièces de maintien opposées (3) sont vissées l'une à l'autre au moyen d'au moins une des vis (5), de telle manière que les bobines opposées (2) soient pressées contre la plaque de refroidissement (1) par les pièces de maintien (3).

5. Partie primaire selon l'une quelconque des revendications précédentes, **caractérisée en ce que** les bobines plates (2) sont bobinées en forme de rondelles Belleville, de telle manière qu'une force d'application exercée par la pièce de maintien (3) dans une région intérieure des bobines (2) soit transmise par un effet de ressort à une région extérieure des bobines (2), et que les bobines (2) soient de ce fait pressées sur toute leur surface contre la plaque de refroidissement (1).

6. Moteur linéaire avec une partie primaire selon l'une quelconque des revendications précédentes.
